# EUROPEAN PATENT APPLICATION

(11) **EP 3 155 900 A1**
(43) Date of publication of application: **19.04.2017**
(21) Application number: 16151532.5
(22) Date of filing: 15.01.2016
(51) Int. Cl.: A01M 31/02

(54) **MOBILE CRANK UP HUNTING SHACK**

(30) Priority: 16.10.2015 US 201514884904
(71) Applicant: Decker, Larry, Moosehorn, Manitobe ROC 2E0 (CA)
(72) Inventor: Decker, Larry, Moosehorn, Manitobe ROC 2E0 (CA)
(74) Representative: Romano, Giuseppe

(57) **Abstract**

The present invention relates to a mobile hunting blind. It is a portable and adjustable hunting blind. The blind is mounted on a trailer (3). The trailer (3) comprises a pair of wheels (9), extension arms (2), a pedestal, stabilizer jacks (4), a ball hitch coupler (5), a shack (1) and a winch (6). Users can attach this trailer (3) to any truck or ATV with the help of ball hitch coupler (5). The hunting blind is basically for covering and protecting the hunter while hunting. It has many advanced features, such extension arms (2) for elevating the shack (1). It has winch (6) for rolling the wire and for extending and pushing down the shack (1) as per the need of the hunter.

## Description

### FIELD OF THE INVENTION

The present invention relates to a hunting blind. More specifically, the present invention relates to a mobile hunting blind that is mounted on a trailer.

### BACKGROUND OF THE INVENTION

Hunting blinds and stands that are used by hunters are commonly made of wood or fabric materials and are often painted or otherwise camouflaged to blend with the surroundings to conceal the hunters from the game they are seeking. Some hunting blinds and stands require the hunter to assume an uncomfortable crouched sitting position, and then stand to shoot as the animal approaches the stand, while others have windows or flaps which pivot outwardly or upwardly in order to provide visibility or to aim the weapon at the game. This movement can be seen by the animals, and will often frighten them away, or at best limit the hunter's opportunity to bag the game.

There are a number of prior art patents directed specifically to hunting blinds, including both on ground and elevated structures.

U.S. Patent number 5,241,772 discloses a hollow cylindrical hunting blind that is supported on the ground or on a tower that is formed of elongated arcuate panels and a domed roof, where the panels thereof simulate tree bark, and includes sliding observation windows, and a releasable ladder.

U.S. Patent number 4,719,716 discloses a cylindrical hunting blind that has external vertical frame members and a conical overhanging roof. The aside wall has window apertures with independently movable curved outer facing window coverings and flat inside facing windows. The outer window coverings and inner windows are hinged to swing upwardly and outwardly and can be opened from inside the blind. The inside windows are held in the vertical position by hook and loop fastener latches.

U.S. Patent number 5,647,159 discloses a low profile, portable, and disassemblable blind for water fowl hunting. It includes a peripheral side frame, a slidable top, and one or more head holes for the hunters to project their heads above the top for observation.

U.S. patent number 4,067,346 discloses a tent-like structure that is comprised of a collapsible hunting blind made of sectional corner posts that are hinged together at their sides so that the sections can be folded against each other, divisional top struts that press the tops of the posts apart and have pins through them so each slat can be folded on itself, and an enclosing cover that is reversible and has different designs on its opposite sides.

None of the above inventions and patents, taken either singularly or in combination, describes the instant invention, as claimed. Thus, a mobile hunting blind solving the aforementioned problems is desired. The current invention resolves the problems of above-mentioned patents.

### SUMMARY OF THE INVENTION

In the view of the foregoing disadvantages inherent in the known types of hunting blinds now present in the prior art, the present invention provides an improved hunting blind. As such, the general purpose of the present invention, which will be described subsequently in greater detail, is to provide a new and improved mobile hunting blind that helps in hunting and has all of the advantages of the prior art and none of the disadvantages.

A primary objective of the present invention is to provide a mobile hunting blind that can be towed behind a truck or ATV.

It is an objective of the invention to provide a mobile hunting blind that has a hand winch for pulling in or letting out the shack cable.

It is, therefore, an objective of the present invention to provide a mobile hunting blind that has a trailer, a winch, a pedestal, telescopic stabilizer jacks, a shack, and extension arms. All of these components are detachable.

It is another objective of the invention to provide a mobile hunting blind that can be elevated up to 5 feet from the ground.

Another objective of the present invention is to provide a mobile hunting blind that is economical to manufacture and easy to implement.

In this respect, before explaining at least one embodiment of the invention in detail, it is to be understood that the invention is not limited in its application to the details of construction and to the arrangements of the components set forth in the following description or illustrated in the drawings. The invention is capable of other embodiments, and of being practiced and carried out in various ways. Also, it is to be understood that the phraseology and terminology employed herein are for the purpose of description, and should not be regarded as limiting.

These, together with other objectives of the invention and the various features of novelty that characterize the invention, are pointed out with particularity in the disclosure. For a better understanding of the invention, its operating advantages, and the specific objectives attained by its uses, reference should be had to the accompanying descriptive matter, in which there are illustrated preferred embodiments of the invention.

Accordingly, the present disclosure includes features and advantages that are believed to enable it to advance the art of placing items on carriers. Characteristics and advantages of the present disclosure described above and additional features and benefits will be readily apparent to those skilled in the art upon consideration of the following detailed description and referring to the accompanying drawings.

### BRIEF DESCRIPTION OF THE FIGURES

The invention will be better understood, and objectives other than those set forth above will become apparent, when consideration is given to the following detailed description thereof. Such description makes reference to the annexed drawings wherein:
FIG. 1 shows the side view of the present invention.
FIG. 2 shows the side elevated view of the present invention.

### DETAILED DESCRIPTION OF THE INVENTION

In the following detailed description, many embodiments are described as per the invention. These embodiments are described in sufficient detail to enable those skilled in the art to practice the invention, and it is to be understood that the embodiments may be combined, or that other embodiments may be utilized, and that structural, logical, and electrical changes may be made without departing from the spirit and scope of the present invention. The following detailed description is, therefore, not to be taken in a limiting sense, and the scope of the present invention is defined by the appended description and their equivalents.

The present invention is directed to a mobile and adjustable elevated hunting blind that may be readily transported and erected at a selected location. The present invention is mounted on a trailer, and the trailer is 9 feet long and 4*4 feet wide. There is a shack for covering and protecting the hunter while hunting. Extension arms are attached below the shack for elevating the shack. The extension arms can be extended up to 5 feet from the ground. The extension arms are 4 feet long. The shack is attached with a hand winch by a cable for elevating and push down the shack. Whenever hunters want, they can roll the winch for elevating the shack and reverse roll for pushing down the shack. Stabilizer jacks are included to stabilize or position the trailer in an elevated position. It is portable so hunters can take it anywhere. There is a ball hitch coupler for attaching the trailer to the truck or ATV. It is comprised of a shack, a winch, a ball hitch coupler, stabilizer jacks, a trailer, extension arms, and a pair of wheels.

The invention is illustrated in the several views, where like reference numerals identify like components or features throughout the Figures.

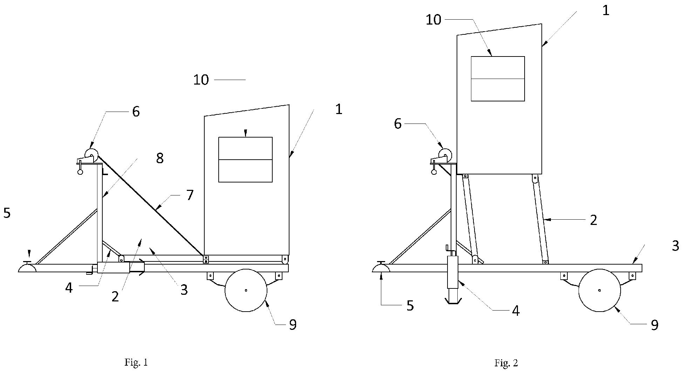

**FIG. 1** is a side view of the mobile and adjustable structure of this invention, illustrating said structure in a pre-setup position, as it might be towed on a trailer 3. The trailer 3 comprises a generally horizontal bed, a pair of wheels 9, a ball hitch coupler 5 for mounting to a complementary connector on a truck, and plural stabilizer jacks 4 for positioning and stabilizing the trailer 3 in a horizontal alignment. It also comprises a shack 1, a winch 6, a cable 7and plurality of extension arms 2 for extending the shack 1.

**FIG. 2** is a side elevated view of this invention. It shows the elevated position of the current invention. It shows the extension arms 2 in standing position. Stabilizer jacks 4 are fixed there for positioning and stabilizing the trailer 3 in a horizontal alignment. A window 10 is also there in shack 1 for helping the hunters in hunting and viewing the animals.

It is to be understood that the above description is intended to be illustrative, and not restrictive. For example, the above-discussed embodiments may be used in combination with each other. Many other embodiments will be apparent to those of skill in the art upon reviewing the above description.

The benefits and advantages that may be provided by the present invention have been described above with regard to specific embodiments. These benefits and advantages, and any elements or limitations that may cause them to occur or to become more pronounced, are not to be construed as critical, required, or essential features of any or all of the embodiments.

While the present invention has been described with reference to particular embodiments, it should be understood that the embodiments are illustrative, and that the scope of the invention is not limited to these embodiments. Many variations, modifications, additions, and improvements to the embodiments described above are possible. It is contemplated that these variations, modifications, additions, and improvements fall within the scope of the invention.

## Claims

1. A mobile hunting blind comprising:
a shack;
a pair of wheels;
a trailer;
a ball hitch coupler;
plurality of stabilizer jacks;
a winch; and
plurality of extension arms.

2. The mobile hunting blind according to claim 1, wherein said shack is used for protecting and covering the hunter while hunting.

3. The mobile hunting blind according to claim 1, wherein said pair of wheels is used for making it portable.

4. The mobile hunting blind according to claim 1, wherein said trailer is used for holding the shack.

5. The mobile hunting blind according to claim 1, wherein said ball hitch coupler is used for attaching the trailer to the truck or ATV.

6. The mobile hunting blind according to claim 1, wherein plurality of said jacks are used for stabilizing or positioning the trailer.

7. The mobile hunting blind according to claim 1, wherein said winch is used for pulling in or letting out the shack cable.

8. The mobile hunting blind according to claim 1, wherein said winch is used for rolling the shack cable.

9. The mobile hunting blind according to claim 1, wherein said winch is used for elevating and pushing down the blind.

10. The mobile hunting blind according to claim 1, wherein a plurality of said extension arms are used for lifting the shack.
